# EUROPÄISCHE PATENTSCHRIFT

(11) **EP 2 117 723 B1**
(45) Veröffentlichungstag und Bekanntmachung des Hinweises auf die Patenterteilung: **07.05.2014**
(21) Anmeldenummer: 07819392.7
(22) Anmeldetag: 27.10.2007
(51) Int. Cl.: B05B 15/12, B01D 47/00

(54) **VERFAHREN UND VORRICHTUNG ZUM ENTFERNEN VON FESTSTOFFEN AUS BEIM LACKIEREN VON GEGENSTÄNDEN ENTSTEHENDEM OVERSPRAY**
METHOD AND DEVICE FOR REMOVING SOLIDS FROM OVERSPRAY GENERATED ON PAINTING OBJECTS
PROCEDE ET DISPOSITIF DESTINES A ELIMINER DES MATIERES SOLIDES D'UNE SURPULVERISATION SE PRESENTANT LORS DU LAQUAGE D'OBJETS

(30) Priorität: 07.12.2006 DE 102006057697
(43) Veröffentlichungstag der Anmeldung: 18.11.2009
(73) Patentinhaber: Eisenmann AG, 71032 Böblingen (DE)
(72) Erfinder: GROSS, Erwin, 75392 Deckenpfronn (DE); SWOBODA, Werner, 71032 Böblingen (DE); HANF, Jürgen, 72070 Tübingen (DE)
(74) Vertreter: Heinrich, Hanjo
(86) Internationale Anmeldenummer: PCT/EP2007/009349
(87) Internationale Veröffentlichungsnummer: WO 2008/067880

(56) Entgegenhaltungen:
- EP-A1- 0 652 038
- FR-A- 2 564 331
- GB-A- 2 001 258
- JP-A- 8 196 963
- US-A- 3 932 151
- US-A1- 2004 000 329
- HECK ET AL: "Reinigung lösungsmittelhaltiger Abluft alternative Möglichkeiten", CHEMIE INGENIEUR TECHNIK, WILEY VCH. VERLAG, WEINHEIM; DE, vol. 60, no. 4, 1 April 1988 (1988-04-01), pages 286-297, XP008158476, ISSN: 0009-286X, DOI: 10.1002/CITE.330600409 [retrieved on 2004-02-02]

## Beschreibung

Die Erfindung betrifft ein Verfahren zum Entfernen von Feststoffen aus beim Lackieren von Gegenständen entstehendem Overspray, bei welchem der Overspray von einem Luftstrom aufgenommen und zu einer von einer Flüssigkeit überströmten Abscheidefläche transportiert wird, wo ein Großteil zumindest der Feststoffe in die Flüssigkeit übergeht, von dieser abtransportiert und durch Abscheiden aus der Flüssigkeit entfernt wird,
wobei
eine wasserfreie Flüssigkeit verwendet wird, die bei der Arbeitstemperatur einen niedrigen Dampfdruck, vorzugsweise niedriger als 30 mbar besitzt, in der sich die Feststoffe nicht lösen und mit der die Feststoffe keine chemische Verbindung eingehen.

Bei der manuellen oder automatischen Applikation von Lacken auf Gegenstände wird ein Teilstrom des Auftragstoffes, der im allgemeinen sowohl Festkörper als auch Lösemittel enthält, nicht auf den Gegenstand appliziert. Dieser Teilstrom wird in der Fachwelt "Overspray" genannt. Der Overspray wird von dem Luftstrom in der Spritzkabine erfaßt und einer Naß- oder Trockenabscheidung zugeführt.

Bei Trockenabscheidesystemen werden die Feststoffe in einem Filtervlies zurückgehalten. Derartige Trockenabscheidesysteme bedürfen einer aufwendigen Wartung und werden vorzugsweise in Anlagen mit geringem Lackverbrauch eingesetzt. Die anfallenden verschmutzten Filter sind aufwendig zu entsorgen.

Daher werden bei Anlagen mit größerem Lackverbrauch bevorzugt Naßabscheidesysteme eingesetzt, bei denen also Verfahren und Vorrichtungen der eingangs genannten Art verwendet werden. Ein solches Naßabscheidesystem ist beispielsweise in der DE 44 01 741 C2 beschrieben. Hier findet als diejenige Flüssigkeit, welche die Abscheidefläche überströmt und in welcher die Feststoffe aufgenommen werden, Wasser Verwendung, dem ggfs. Zusatzstoffe, beispielsweise Koaguliermittel, beigemischt werden. Die Luft mit den flüchtigen Bestandteilen des Oversprays, insbesondere also den Lösemitteln, gelangt im allgemeinen als Abluft in die Atmosphäre. Bei besonders hoch belasteten Lackieranlagen wird zur Vermeidung von Lösemittelemissionen ein Abluftreinigungssystem auf der Basis von Adsorbtion und/oder thermischer Oxidation nachgeschaltet.

Durch die Verwirbelung des Luftstromes mit dem zum Abscheiden der Feststoffe verwendeten Wasser wird der Luftstrom sehr stark aufgefeuchtet. Eine direkte Luftrückführung in die Spritzkabine ist wegen der Feuchte- und Lösemittelbelastung und Temperaturabsenkung der Luft nur in Ausnahmen möglich.

Aus aus der US 3 932 151 A, der JP 08 196963 A, der GB 2 001 258 A, der FR 2 564 331 A und der US 2004/000329 A1 ist darüber hinaus bekannt, dass Mineralöle als Flüssigkeit verwendet werden können. Eine Vielzahl von solchen Flüssigkeiten, welche den Anforderungen entsprechen, insbesondere ölartige Substanzen, ist von dem Fachmann anhand der Literatur leicht auffindbar.

Im Zusammenhang mit anderen Verbindungen als Feststoffen in Abluft ist in der EP 0 652 038 A1 und dem Artikel von Heck et al. "Reinigung lösungsmittelhaltiger Abluft - alternative Möglichkeiten", Chemie Ingenieur Technik, Wiley VCH. Verlag Weinheim, DE, Bd. 60, Nr. 4, April 1988 (1988-04-01), Seiten 286-297, ist beschrieben, wie flüchtige organische Komponenten, insbesondere Lösemittel, aus Abluft entfernt werden können.

Aufgabe der vorliegenden Erfindung ist es, ein Verfahren und der eingangs genannten Art zu schaffen, bei welchen die Abluftaufbereitung weniger aufwendig ist und die Möglichkeit besteht, die Abluft sowohl in die Atmospäre als auch direkt in die Spritzkabine zurückzuführen.

Diese Aufgabe wird, was das Verfahren angeht, dadurch gelöst, daß
als Flüssigkeit ein Pflanzenöl oder ein Glykolether verwendet wird.

Ein Pflanzenöl ist verhältnismäßig preiswert erhältlich und kann von der Kostenseite her insbesondere bei einer Rezirkulation mit der Verwendung von Wasser konkurrieren.

Alternativ ist es möglich, als Flüssigkeit, welche die Feststoffe aufnimmt, einen Glykolether einzusetzen. Auch dieser ist kostenmäßig, insbesondere bei einer Rezirkulation, mit Wasser konkurrenzfähig.

Erfindungsgemäß wird also ebenfalls von der Verwendung von Wasser als Abscheideflüssigkeit für die Feststoffe abgegangen, da dieses bei den üblicherweise verwendeten Arbeitstemperaturen einen sehr hohen Dampfdruck besitzt.

Üblicherweise liegt die Arbeitstemperatur bei Verfahren der hier interessierenden Art unterhalb von etwa 28°C.

Als Pflanzenöl kommen insbesondere Rapsöl und Palmöl oder Mischungen aus Pflanzenölen in Frage.

Generell gilt, daß die Wahl der Flüssigkeit zum Abscheiden der Feststoffe aus dem Overspray und auch derjenigen zum Abscheiden von Lösemitteln vom verwendeten Lacksystem abhängig ist. So werden vorwiegend Öle oder Mischungen aus Ölen bei wasserverdünnbaren Lacksystemen und Glykolether bei mit organischen Lösemitteln verdünnbaren Lacksystemen eingesetzt. Es eignen sich aber auch Mischungen der genannten Flüssigkeiten, um durch die Wahl des Mischungsverhältnisses ein breites Spektrum der in Lacksystemen als Verdünnung eingesetzten Lösemittel abscheiden zu können.

Stromab von der Abscheidefläche werden bei einem besonders bevorzugten Ausführungsbeispiel des erfindungsgemäßen Verfahrens aus dem von Feststoffen weitgehend befreiten Luftstrom die Lösemittel weitgehend abgeschieden und der so gereinigte Luftstrom wird zur weiteren Verwendung zurückgeführt. Der hiermit verbundene apparative Aufwand ist, verglichen mit den Luftaufbereitungsanlagen, die beim Stande der Technik eingesetzt werden, gering.

Bevorzugt wird dabei, daß die Lösemittel ebenfalls in einer wasserfreien Flüssigkeit aus dem Luftstrom abgeschieden werden, die bei der Arbeitstemperatur einen niedrigen Dampfdruck, vorzugsweise niedriger als 30 mbar, besitzt und die mit den Lösemitteln keine chemische Verbindung eingeht. Grundsätzlich eignet sich hierfür ein Verfahren, welches in der WO 2004/008034 A1 beschrieben ist, dort aber im wesentlichen zur Bindung von in der zu reinigenden Luft enthaltenden Geruchsstoffen verwendet wird.

Vorzugsweise ist die zur Abscheidung der Lösemittel verwendete Flüssigkeit dieselbe wie die zur Abscheidung der Feststoffe verwendete Flüssigkeit. Lagerhaltung und Entsorgung vereinfachen sich auf diese Weise erheblich; die Zahl unterschiedlicher chemischer Stoffe, die in der Anlage vorhanden sind, wird reduziert.

Ein Ausführungsbeispiel der Erfindung wird nachfolgend anhand der Zeichnung näher erläutert; die einzige Figur zeigt in vertikalem Schnitt eine Spritzkabine für Fahrzeugkarosserien mit den zugehörigen, zur Wiedergewinnung der Feststoffe aus dem Overspray und zur Aufbereitung der Kabinenluft verwendeten Komponenten.

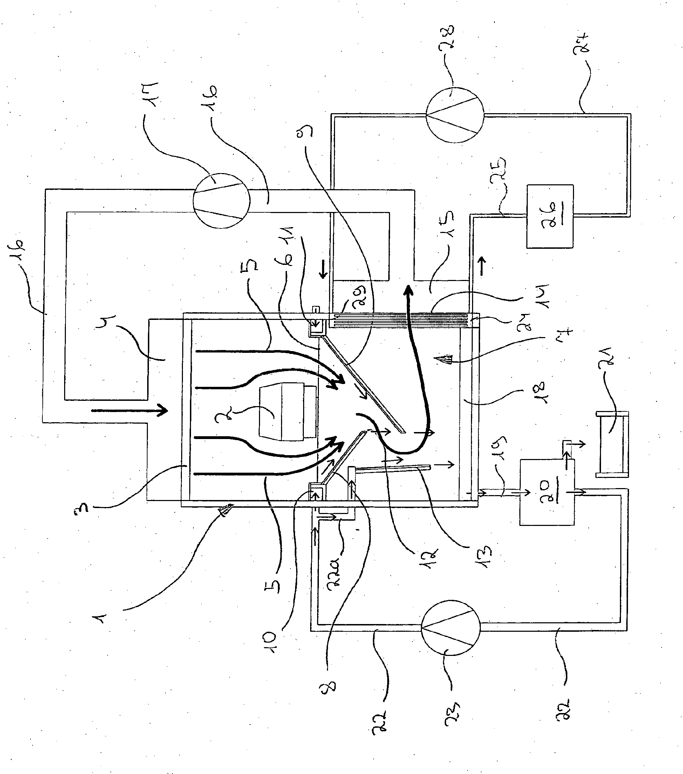

In Figur 1 ist mit dem Bezugszeichen 1 eine im Grundsatz herkömmliche Spritzkabine bezeichnet, in welcher Fahrzeugkarosserien 2 lackiert werden. Die Fahrzeugkarosserien 2 werden mit Hilfe eines nicht im Detail dargestellten Fördersystems senkrecht zur Zeichenebene ins Innere der Spritzkabine 1 und wieder aus dieser herausbefördert. Diese Förderbewegung kann kontinuierlich oder diskontinuierlich erfolgen; der Lack kann manuell oder durch automatisch geführte Applikationseinrichtungen aufgebracht werden.

Die Decke 3 der Spritzkabine 1 ist in bekannter Weise als Filterdecke ausgebildet. Konditionierte Luft, die sich in einem oberhalb der Decke 3 befindlichen Luftplenum 4 befindet, kann die Filterdecke 3 durchtreten und im Sinne der Pfeile 5 beidseits der Fahrzeugkarosserien 2 nach unten strömen. Unter "Konditionierung" ist dabei insbesondere die Einstellung einer bestimmten Temperatur, Feuchtigkeit und Reinheit gemeint. Die Luft transportiert dabei den Overspray ab, der nicht an den Fahrzeugkarosserien 2 haften bleibt.

Der Boden 6 der eigentlichen Spritzkabine 1 ist zumindest teilweise als Rost ausgebildet, derart, daß er von der Luft durchströmt werden kann.

Unterhalb des Bodens 6 der Spritzkabine 1 befindet sich ein Nassabscheidungssystem, in der Fachsprache "Auswaschung" genannt, das insgesamt mit dem Bezugszeichen 7 gekennzeichnet ist. Diese Auswaschung 7 dient dazu, die Overspray-Feststoffe aus der Luft zu entfernen. Sie umfaßt zwei als Abscheidekörper dienende Rieselbleche 8, 9, die sich im wesentlichen über die gesamte Kabinenlänge senkrecht zur Zeichenebene erstrecken und so geneigt sind, daß sie in Richtung auf die Kabinenmitte aufeinanderzu konvergieren. Beide Rieselbleche 8, 9 sind mit ihren oberen Rändern mit Überlaufrinnen 10, 11 verbunden, die etwa in Höhe des Bodens 6 der Spritzkabine 1 angeordnet sind. Während das in der Zeichnung linke Rieselblech 8 nicht bis ganz in die Mitte der Spritzkabine 1 reicht, erstreckt sich das in der Zeichnung rechte Überlaufblech 9 über die Spritzkabinenmitte 1 hinweg und endet mit dem senkrecht zur Zeichenebene verlaufenden Rand vertikal unterhalb des entsprechenden Randes des linken Rieselbleches 8. Auf diese Weise entsteht zwischen den beiden genannten Rändern der Rieselbleche 8, 9 eine schlitzartige Durchtrittsöffnung 12.

Seitlich von der Durchtrittsöffnung 12 verläuft, ebenfalls senkrecht zur Zeichenebene und über die gesamte Länge der Spritzkabine 1 hinweg, ein annähernd vertikal ausgerichtetes Prallblech 13. Die von dem Prallblech 13 weiter entfernte Seitenwandung der Auswaschung 7 wird von einem Filter 14 gebildet, dessen Bauweise und Funktion weiter unten erläutert wird. Der stromab von dem Filter 14 liegende Raum 15 ist über eine Rückführungsleitung 16, in welcher ein Gebläse 17 liegt, mit dem Luftplenum 4 verbunden.

Anders als bei herkömmlichen Auswaschungen werden die als Abscheideflächen dienenden Oberseiten der Rieselbleche 8, 9 nicht von Wasser, sondern von einem Ö1 überströmt, das über die Überlaufrinnen 10, 11 zugeführt wird. Das Öl. wird nach folgenden Gesichtspunkten gewählt: Es sollte ein möglichst großes Aufnahmevermögen für die Feststoffe des Oversprays aufweisen, einen niedrigen Dampfdruck bei den Betriebstemperaturen der Anlage besitzen, keine chemische Bindung mit den Feststoffen des Oversprays eingehen und diese auch nicht lösen können, so daß eine leichte Trennung des Öls von den Feststoffen möglich ist. Außerdem sollte die Viskosität so sein, dass eine ausreichende Fließgeschwindigkeit erzielbar ist. Beispiele für derartige Öle sind Pflanzenöle, insbesondere Rapsöl und Palmöl. Neben Ölen kommen auch andere Flüssigkeiten, beispielsweise Glykolether, in Frage, soweit sie die oben genannten Anforderungen erfüllen. Auch Mischungen aus Öl bzw. Ölen und Glykolether sind möglich, um sowohl das Ausnahmevermögen als auch die Fließeigenschaften zu verbessern. Ggfs. kann zur Veränderung der Fließeigenschaften auch die Temperatur der gewählten Flüssigkeit verändert werden.

Im unteren Bereich des Abscheiders 7 befindet sich ein Sumpf 18, in dem sich das herabfließende, Feststoff-haltige Ö1 sammelt. Eine Leitung 19 führt vom Sumpf 18 zu einem Abscheider 19, der in der Lage ist, das Öl von den von ihm mitgeführten Feststoffen des Oversprays zu trennen. Letztere werden in einem Behälter 21 gesammelt und der Weiterverwertung oder Entsorgung zugeführt.

Eine Leitung 22 führt vom Abscheider 20 über eine Pumpe 22 zurück zu den Überlaufrinnen 10 und 11. Eine Abzweigung 22a der Leitung 22 führt außerdem zu dem Prallblech 13, das ebenfalls von dem Öl überströmt wird.

Das oben schon angesprochene Filter 14 besitzt eine Bauweise, die derjenigen ähnlich ist, die in der WO 2004/ 008034 A1 beschrieben ist. Es enthält eine Naßfiltereinrichtung mit einer Mehrzahl von aus Kunststoff oder Metallfäden gestrickten Schläuchen als Filterelementen, die in vertikaler Ausrichtung eng nebeneinander angeordnet sind und an denen die Luft entlang strömt. Die Innenräume der Schläuche werden vorzugsweise von demselben Ö1 von oben nach unten unter dem Einfluß der Schwerkraft durchströmt, die auch über die Rieselbleche 8, 9 fließt. Grundsätzlich könnte aber hier auch eine andere flüssige Substanz gewählt werden. Das Öl tritt aufgrund der Durchlässigkeit der Wände der gestrickten Schläuche nach außen aus und strömt über die Außenfläche der gestrickten Schläuche nach unten.

Die Schläuche können auch poröse Kunststoffschläuche sein. Generell wird hier unter dem Begriff "Schlauch" ein von Flüssigkeit durchströmbarer, länglicher Hohlkörper verstanden.

Am unteren Ende des Filters 14 befindet sich ein eigener, diesem Filter 14 zugeordneter Sumpf 24, der über eine Leitung 25 mit einer Regenerationsvorrichtung 26 verbunden ist, auf deren Funktion weiter unten eingegangen wird.

Eine weitere Leitung 27 führt über eine Pumpe 28 zurück zum Filter 14 und zwar zu einem oberen Verteilraum 29, über welche die Innenräume der gestrickten Schläuche zugänglich sind. Auf diese Weise ist der Kreislauf für das das Filter 14 durchströmende Ö1 geschlossen.

Die oben beschriebene Anlage arbeitet wie folgt:
Die zu lackierenden Fahrzeugkarosserien 2 werden mit Hilfe des nicht dargestellten Transportsystems in den Innenraum der Spritzkabine 1 eingebracht und dort, wie schon erwähnt, manuell oder automatisch mit Lack beaufschlagt. Der nicht auf den Fahrzeugkarosserien 2 haften bleibende Overspray wird von den die Spritzkabine 1 von oben nach unten im Sinne der Pfeile 5 durchfließenden Luftströmen mitgenommen; im Falle von Lösemittellacken gilt dasselbe auch für Lösemittel, so daß der Boden 6 der Spritzkabine von einer Mischung aus Luft, Lack-Feststoffen und Lösemitteln durchtreten wird.

Diese Mischung trifft nun zunächst auf das Öl, welches die beiden Rieselbleche 8, 9 überströmt. Bereits an dieser Stelle wird ein Teil der Feststoffe von dem Öl aufgenommen. In der Durchtrittsöffnung 12 zwischen den beiden Rieselblechen 8, 9 wird die Strömungsgeschwindigkeit der fraglichen Mischung erhöht, was zu einer Wirbelbildung und damit einer noch besseren Durchmischung der Feststoffe und Lösemittel mit sich führenden Luft mit dem Öl führt und die Aufnahme der Feststoffpartikel in das Öl weiter fördert. Dem gleichen Zweck dient der Aufprall der Luft-/Feststoff-/Lösemittelmischung auf das mit dem Öl überströmte Prallblech 13.

Das Feststoff-haltige Öl fließt dann weiter nach unten in Richtung auf den Sumpf 18 ab, wird über die Leitung 19 dem Abscheider 20 zugeführt, wo die Feststoffe in geeigneter Weise herausgefiltert und dem Behälter 21 zugeführt werden. Das so von Feststoffen befreite Öl kehrt mit Hilfe der Pumpe 23 über die Leitung 22 zu den Überlaufrinnen 10, 11 bzw. zur Prallplatte 13 zurück.

An der Prallplatte 13 kehrt sich außerdem die Strömungsrichtung der Luft, die nunmehr nur noch ganz wenig Feststoffe, jedoch noch in gewissem Umfange Lösemittel enthält, um nahezu 180° um. Diese Mischung durchströmt nunmehr das Filter 14. Das Öl, welches durch die gestrickten Schläuche des Filters 14 zirkuliert, ist nunmehr in der Lage, aus der durchströmenden Luft das Lösemittel aufzunehmen, so daß die über die Leitung 16 von dem Gebläse 17 in das Luftplenum 4 der Spritzkabine 1 zurückgeführte Luft im wesentlichen lösemittelfrei ist.

Sofern die Luft vor dem Durchtritt durch das Filter 14 noch einen geringen Feststoffanteil enthält, wird dieser ebenfalls an den Oberflächen der gestrickten Schläuche des Filters 14 abgeschieden.

Das Öl des Filters 14 wird in der Regenerationsvorrichtung 26 von Lösemittel befreit. Dabei kann es sich beispielsweise um eine Stripp- oder Destillations-Anlage oder eine sonstige Phasentrenneinrichtung handeln, wie diese an und für sich bekannt ist. Bei Kleinanlagen ist es auch möglich, auf die Regenerationsvorrichtung 26 zu verzichten und das Öl des Filters 14 von Zeit zu Zeit auszutauschen und das verbrauchte Öl dem Hersteller zur Reinigung zurückzuleiten.

Bei starker Oxidationsneigung des verwendeten Pflanzenöls besteht auch die Möglichkeit, dieses mit Lösemitteln verunreinigte Ö1 als Ersatzbrennstoff für eine thermische Verwertung zu verwenden, deren Wärmeenergie beispielsweise für einen Trockner eingesetzt werden kann.

## Patentansprüche

1. Verfahren zum Entfernen von Feststoffen aus beim Lackieren von Gegenständen entstehendem Overspray,
bei welchem der Overspray von einem Luftstrom aufgenommen und zu einer von einer Flüssigkeit überströmten Abscheidefläche transportiert wird, wo ein Großteil zumindest der Feststoffe in die Flüssigkeit übergeht, von dieser abtransportiert und durch Abscheiden aus der Flüssigkeit entfernt wird,
wobei
eine wasserfreie Flüssigkeit verwendet wird, die bei der Arbeitstemperatur einen niedrigen Dampfdruck, vorzugsweise niedriger als 30 mbar besitzt, in der sich die Feststoffe nicht lösen und mit der die Feststoffe keine chemische Verbindung eingehen,
**dadurch gekennzeichnet, dass**
als Flüssigkeit ein Pflanzenöl oder ein Glykolether verwendet wird.

2. Verfahren nach Anspruch 1, **dadurch gekennzeichnet,**
**dass** die Arbeitstemperatur unterhalb von etwa 28°C liegt.

3. Verfahren nach Anspruch 1 oder 2, **dadurch gekennzeichnet, dass** als Flüssigkeit Rapsöl verwendet wird.

4. Verfahren nach einem der vorhergehenden Ansprüche,
**dadurch gekennzeichnet, dass** stromab von der Abscheidefläche aus dem von Feststoffen weitgehend befreiten Luftstrom die Lösemittel weitgehend abgeschieden und der so gereinigte Luftstrom zur weiteren Verwendung zurückgeführt wird.

5. Verfahren nach Anspruch 4, **dadurch gekennzeichnet,**
**dass** die Lösemittel ebenfalls in einer wasserfreien Flüssigkeit aus dem Luftstrom abgeschieden werden, die bei der Arbeitstemperatur einen niedrigen Dampfdruck, vorzugsweise niedriger als 30 mbar, besitzt, und die mit den Lösemitteln keine chemische Verbindung eingeht.

6. Verfahren nach Anspruch 5, **dadurch gekennzeichnet,**
**dass** die zur Abscheidung der Lösemittel verwendete Flüssigkeit dieselbe wie die zur Abscheidung der Feststoffe verwendete Flüssigkeit ist.

## Claims

1. A process for removing solid materials from overspray produced when painting objects, in which the overspray is taken up by an airstream and transported to a separating surface over which a liquid flows, where a majority at least of the solid materials passes over into the liquid, is transported away by this and removed from the liquid via separation,
wherein
an anhydrous liquid is used which has a low vapour pressure at the operating temperature, preferably lower than 30 mbar, in which the solid materials do not dissolve and with which the solid materials do not form a chemical compound,
**characterised in that**
a vegetable oil or a glycol ether is used as the liquid.

2. A process according to Claim 1, **characterised in that** the operating temperature is below approximately 28°C.

3. A process according to Claim 1 or 2, **characterised in that** rapeseed oil is used as the liquid.

4. A process according to one of the preceding claims, **characterised in that**, downstream of the separating surface, the solvents are substantially separated from the airstream which is substantially free of solid materials and the airstream which is cleaned in this way is returned for further use.

5. A process according to Claim 4, **characterised in that** the solvents are likewise separated from the airstream in an anhydrous liquid which has a low vapour pressure at the operating temperature, preferably lower than 30 mbar, and which does not form a chemical compound with the solvents.

6. A process according to Claim 5, **characterised in that** the liquid used to separate the solvents is the same as the liquid used to separate the solid materials.

## Revendications

1. Procédé destiné à éliminer des substances solides d'un brouillard dispersé excédentaire engendré au cours du laquage d'objets, dans lequel ledit brouillard dispersé excédentaire est piégé par un courant d'air et est acheminé vers une surface de séparation balayée en surplomb par un fluide, et sur laquelle une majeure partie d'au moins les substances solides passe dans ledit fluide, est évacuée par ce dernier, puis est éliminée dudit fluide par séparation,
sachant
qu'il est fait usage d'un fluide anhydre qui présente une pression de vapeur faible, de préférence inférieure à 30 mbar à la température de travail, dans lequel les substances solides ne se dissolvent pas, et avec lequel lesdites substances solides n'entrent pas en liaison chimique,
**caractérisé par le fait**
**qu'**une huile végétale et/ou un éther de glycol est employé(e) en tant que fluide.

2. Procédé selon la revendication 1, **caractérisé par le fait que** la température de travail se situe en deçà d'environ 28° C.

3. Procédé selon la revendication 1 ou 2, **caractérisé par le fait que** de l'huile de colza est employée en tant que fluide.

4. Procédé selon l'une des revendications précédentes, **caractérisé par le fait que** les solvants sont amplement séparés d'avec le courant d'air largement débarrassé de substances solides, en aval de la surface de séparation, et le courant d'air ainsi épuré est renvoyé en vue de la réutilisation.

5. Procédé selon la revendication 4, **caractérisé par le fait que** les solvants sont pareillement séparés, d'avec le courant d'air, dans un fluide anhydre présentant une pression de vapeur faible, de préférence inférieure à 30 mbar à la température de travail, et n'entrant pas en liaison chimique avec lesdits solvants.

6. Procédé selon la revendication 5, **caractérisé par le fait que** le fluide, employé pour la séparation des solvants, est le même que le fluide employé pour la séparation des substances solides.
